# EUROPEAN PATENT APPLICATION

(11) **EP 1 720 109 A2**
(43) Date of publication of application: **08.11.2006**
(21) Application number: 06113153.8
(22) Date of filing: 26.04.2006
(51) Int. Cl.: G06F 17/30

(54) **Apparatus and method for storing and managing additional data in file system**

(30) Priority: 04.05.2005 KR 20050037676
(71) Applicant: Samsung Electronics Co., Ltd., Suwon-si 442-742 Gyeonggi-Do (KR)
(72) Inventor: Seo, Dong-young, Hwaseong-si Gyeonggi-do (KR); Bae, Sung-hwan, Seoul (KR); Kwon, Moon-sang, Seoul (KR); Kim, Chan-kyu, Seoul (KR); Shin, Hee-sub, Padal-gu Suwon-si Gyeonggi-do (KR)
(74) Representative: Robinson, Ian Michael

(57) **Abstract**

Disclosed are an apparatus and a method for storing and managing additional data in a file system. The apparatus comprises a search unit (310) to search for an unused region in a directory entry, a storage unit (330) to store additional data in the unused region, and an additional data managing unit (360) to locate the position of the additional data using the signature and checksum of the additional data. The method includes (a) searching for an unused region of a directory entry, (b) storing additional data in the unused region, and (c) locating the position of the additional data using the signature and checksum of the additional data. According to the present invention, additional data can be stored, used and managed utilizing unused regions of a directory entry without degrading the compatibility of the file system, and enhancing the performance of the FAT file system.

## Description

Apparatuses and methods consistent with the present invention relate to storage and management of additional data in a file system. More particularly, the present invention relates to an apparatus and a method capable of storing additional data using an unused region of the file allocation table (FAT) file system without adversely affecting its compatibility with other file systems.

Among the current file systems, a file allocation table (FAT) file system is most widely used in mobile devices and Windows environment, and has the best compatibility with other file systems. The FAT organizes the storage space of a hard disk. This table is composed of information on files in the hard disk, and has a series of numbers to identify where each fragment of a single file is positioned. Like a table of contents in a book, the FAT system is designed such that an operating system can know in which cluster of the hard disk a file or directory is recorded.

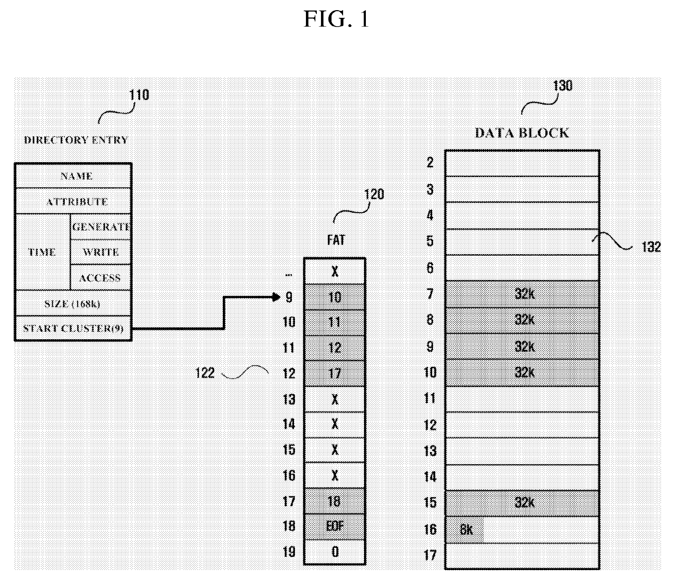

As illustrated in Figure 1, the FAT file system consists of a data block 130 to store data therein, and a FAT 120 to indicate use or non-use of the data block 130 and relationships between blocks. The data block 130 is managed on a cluster 132 basis, and each cluster corresponds to each element 122 of the FAT 120. Each file is represented by a data structure called a directory entry 110. The directory entry includes the name of the file, attributes of the file, the date of generation of the file, write and access permissions of the file, a size variable to indicate the size of the file, and a start cluster variable to indicate the cluster where the file starts. A next cluster of a file is the cluster where a portion of the files is written. As described above, the FAT represents positions of data of a file scattered on a cluster basis and stored in the data block in a mapping list format, and indicates whether a corresponding cluster is used.

The FAT 120 stores values to indicate whether data mapped to the file is present in a corresponding data block and, if present, whether it is the last part of the file. In Figure 1, the symbol "X" indicates that the corresponding cluster is empty, and the symbol "EOF" (End of File) indicates the corresponding data is the last portion of data of the file. In addition, numerals indicate the number of the next cluster.

In the FAT file system, a new file is created and data is written through the following operations. A directory entry corresponding to the new file is allocated. To write data of the file, the operating system searches for an empty cluster of the data block and allocates it to the new file. The operating system writes "EOF" in the element of the FAT corresponding to the allocated cluster in order to indicate that this cluster is allocated to the file, and then records data in the corresponding cluster. By writing the cluster number in the start cluster variable of the directory entry, the first cluster of the file can be known.

When the size of a file is larger than a single cluster of a data block, another empty cluster is allocated, and the number of the allocated cluster is written in the element of the FAT corresponding to the first cluster, and "EOF" is written in the element of the FAT corresponding to the newly allocated cluster. In the last cluster of the file, data smaller in size than the cluster may be written, and the file size is written in the size variable of the directory entry.

In the FAT file system, a file is read through the following operations. A directory entry of a file to be read ("target file") is searched for using the name of the target file. As much data as the size value in the directory entry is read from the cluster recorded in the start cluster variable to the cluster written with "EOF".

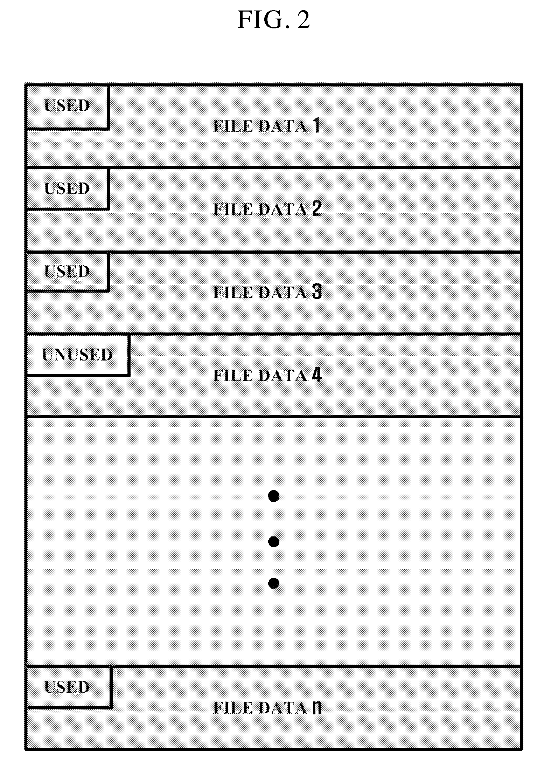

Figure 2 illustrates the storing of file information in a directory entry of the file system according to the conventional art. This manner of storage in the FAT file system is designed to write file information. A directory entry 110 is divided into a file data portion and a use (or non-use) portion to designate whether data stored in the file data portion is currently available for use.

As illustrated in Figure 2, the file system determines whether a file is present by distinguishing whether the file data of the directory entry is available for use. In this process of the file system, although there are many unused portions, there is no file system compatibility problem. In the FAT file system, the unused portions are ignored and only the portions available for use are processed.

Like most file systems of general operating systems (OSs), the FAT is also a general purpose system that represents both small files and large files and considers data insertion and size change due to modification of the recorded data of files. However, a file system whose storage method is fixed, like this FAT file system, has no functions for recovery and storage of additional data. Further, when a file or directory is located or read, and write positions move within a file, the search has to be conducted from the start, thereby considerably degrading the speed of a mass storage device. In FAT32, the size of the FAT disk partition is 32 kB x 4 B (32 bit). Assuming that a hard disk size is 80 GB, a 10 MB (80 GB / (32 kB x 4 B)) FAT partition is needed. To find an empty cluster, at the worst a 10 MB search is required.

The FAT file system represents data chains in the form of a mapping list. However, to play multimedia, modes of forward/backward high speed search, reverse play, and forward/backward search on a frame basis should all be supported. The FAT file system only supports a unidirectional mapping list. Accordingly, the search should be conducted from the start cluster of the file in order to move a file pointer in a reverse direction as much as the fixed offset from a specific file position.

Moreover, the FAT file system can only read the corresponding data in the latter portion of a file after having located the cluster mapping. In this case, locating the cluster information causes a serious degradation in performance. In the FAT file system, to store a long filename, several file and directory data regions are additionally used. In this case, to locate the file, all the data within these regions should be processed. The FAT file system also has no function to write information for file recovery, and thus, data not stored is lost when power is abruptly interrupted.

According to the present invention there is provided an apparatus and method as set forth in the appended claims. Preferred features of the invention will be apparent from the dependent claims, and the description which follows.

Accordingly, the present invention has been proposed to address the above and other problems associated with the related art. An aspect of the present invention is to provide an apparatus and a method for storing and managing additional data in a file system, wherein the additional data is stored using unused regions for file data of a directory entry to thereby enhance the performance of the file system, without degrading the compatibility of the file system in the FAT file system.

Another aspect of the present invention is to provide an apparatus and a method for rapidly accessing the stored additional data.

A further aspect of the present invention is to provide an apparatus and a method for rapidly moving read and write positions within a file, using additional position data in the file.

A still further aspect of the present invention is to provide an apparatus and a method for analyzing attributes of a file, using additional attribute data of the file.

A still further aspect of the present invention is to provide an apparatus and a method for easily locating a file having a long name, using additional data of the file name.

A still further aspect of the present invention is to provide an apparatus and a method for easily obtaining the number of directories or the size of each directory, using additional data of the directories.

A still further aspect of the present invention is to provide an apparatus and a method for easily restoring a file, using additional data for restoration of the file.

The present invention shall not be limited to the objects described above. Any other aspect(s) not described herein shall be clearly understood by those skilled in the art from the descriptions stated below.

According to an aspect of the present invention, there is provided an apparatus for storing and managing additional data in a file system, comprising a search unit to search for an unused region in a directory entry, a storage unit to store additional data in the unused region, and an additional data managing unit to locate the position of the additional data using a signature and a checksum of the additional data.

According to another aspect of the present invention, there is provided a method comprising (a) searching for an unused region of a directory entry, (b) storing additional data in the unused region, and (c) locating the position of the additional data using a signature and a checksum of the additional data.

The above and other features and advantages of the present invention will become more apparent by describing in detail preferred embodiments thereof with reference to the attached drawings, in which:
Figure 1 illustrates a file system using a file allocation table (FAT) according to the conventional art;
Figure 2 illustrates a state that data for a file is stored according to the conventional art;
Figure 3 is a block diagram illustrating an apparatus for storing and managing additional data in a file system according to an exemplary embodiment of the present invention;
Figure 4 illustrates states before and after the additional data is stored according to an exemplary embodiment of the present invention;
Figure 5 is a flow chart illustrating a method of storing and managing the additional data in a file system according an exemplary embodiment of to the present invention;
Figure 6 is a flow chart illustrating a method of searching for the added data according to an exemplary embodiment of the present invention;
Figure 7 illustrates a method of storing position data within a file in conventional FAT file system and illustrates a method of moving a position within a file according to an exemplary embodiment of the present invention;
Figure 8 illustrates a concept of rapidly searching for a file or directory according to an exemplary embodiment of the present invention;
Figure 9 is a flow chart illustrating a concept of rapidly searching for a file or directory according to another exemplary embodiment of the present invention as illustrated in Figure 8;
Figure 10 illustrates storing of files in a directory of the conventional FAT file system and illustrates a concept of storing additional data in a directory according to another exemplary embodiment of the present invention; and
Figure 11 illustrates a concept of storing additional data for recovery of a file according to another exemplary embodiment of the present invention.

Hereinafter, exemplary embodiments of the present invention will be described in detail with reference to the accompanying drawings. Advantages and features of the present invention and methods of accomplishing the same may be understood more readily by reference to the following detailed description of the exemplary embodiments and the accompanying drawings. The present invention may, however, be embodied in many different forms and should not be construed as being limited to the exemplary embodiments set forth herein. Rather, these exemplary embodiments are provided so that this disclosure will be thorough and complete and will fully convey the concept of the invention to those skilled in the art, and the present invention will only be defined by the appended claims. Like reference numerals refer to like elements throughout the specification.

Exemplary embodiments of the present invention will be described in detail with reference to the accompanying drawings.

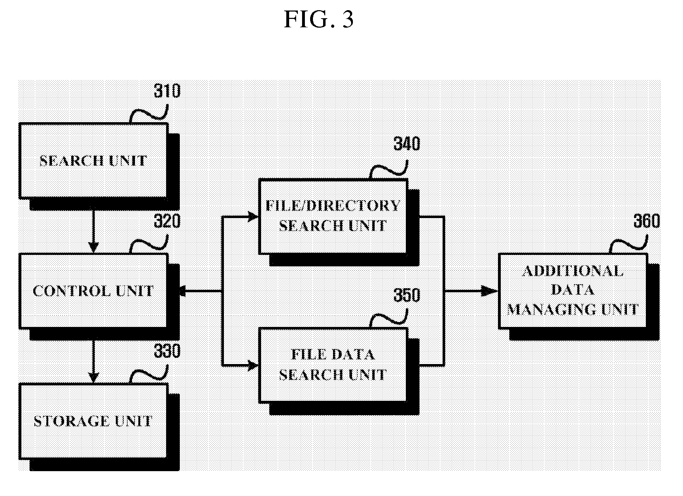

Figure 3 is a block diagram illustrating an apparatus for storing and managing additional data in a file system according to an exemplary embodiment of the present invention. This apparatus comprises a search unit 310, a control unit 320, a storage unit 330, a file/directory search unit 340, a file data search unit 350 and an additional data managing unit 360.

The search unit 310 searches for unused regions in the directory entry 110 according to direction of the control unit 320.

The control unit 320 concurrently controls the storage unit 330 (to be described later) and the search unit 310 so that a variety of additional data for a file or directory are stored in the unused regions.

The storage unit 330 stores metadata of a file or directory in a directory entry of the FAT file system. The storage unit 330 also operates according to the direction of the control unit 320.

The additional data managing unit 360 manages additional data stored by the storage unit 330. A main function of the additional data managing unit 360 is to search for the added data using a signature and a checksum.

The file/directory search unit 340 searches for the position of a file or directory when opening a file or directory. As an example, when data for the filename was added in an empty region of the directory entry, it compares the checksum of the filename with the checksum of the name of a file being searched for ("target file"), generates the filename according to the checksum of the additional data if the checksums are identical, and compares the generated filename with the name of the target file, thereby locating the target file.

The file data search unit 350 is controlled by the control unit 320 and moves a pointer within the file when reading data. When position data within the file is added, it allows a user to quickly move to read and write positions that are desired by a user within the file according to the position data.

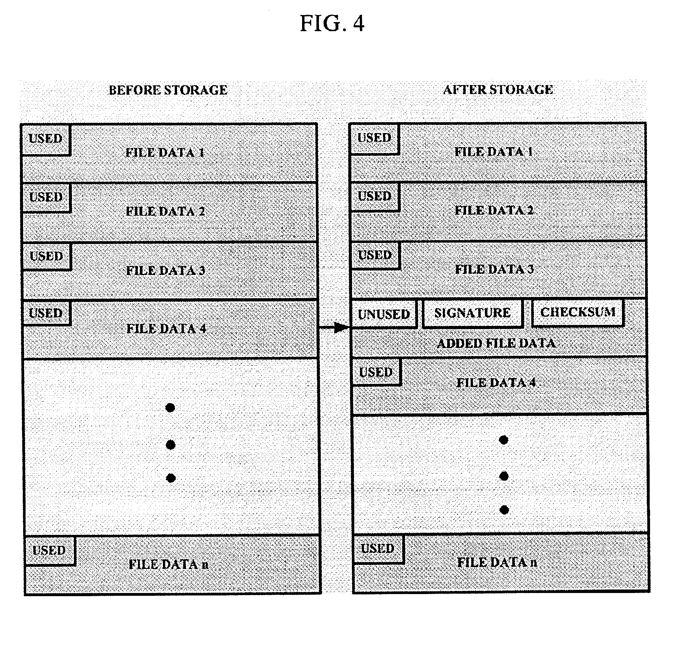

Figure 4 illustrates states before and after the additional data is stored according to an exemplary embodiment of the present invention. Referring to the left side of Figure 4, when there is a need to add information on a file or directory, the additional data may be written before or after the file data #4 region as depicted in the right figure thereof. However, not all the files require writing additional data. General file or directory data is used as it is, and data is added to the empty region only when it is required for improved performance (detailed in the following).

When additional data for a file is needed, an empty region before or next to the file data is searched for. A signature implying that this is additional data, data to be added, additional data containing both data and a checksum for the whole region, and the like are recorded in the empty region. The checksum is an error detecting method used to inspect the accuracy of the data. Usually, when inputting or sending data, a checksum, which is a sum of all the data, is sent separately before the data is sent. The receiving side adds up the data every time it receives the data, and compares the result thereof with the checksum to thereby check any error therein.

If no region to record additional data is present, data for a specific file or directory is moved to another region, and the additional data is recorded in the empty region. In this case, the compatibility of the FAT file system is not affected. There are no limitations on the quantity of added data, and as many unused regions as are required can be created for use (within the disk space limitations).

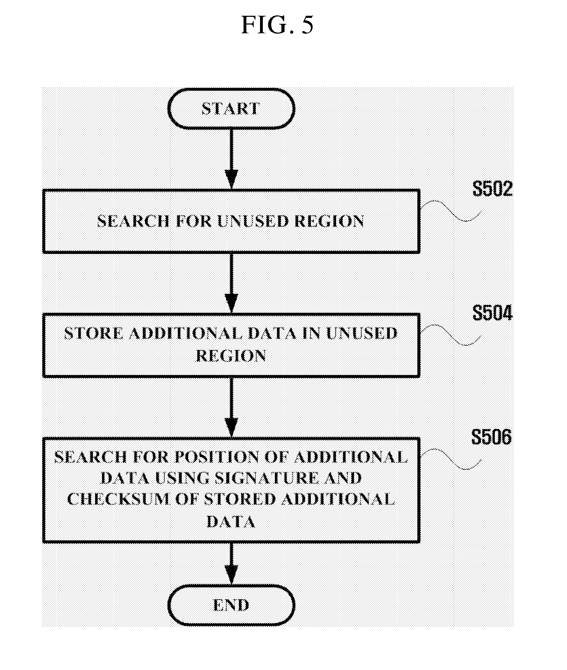

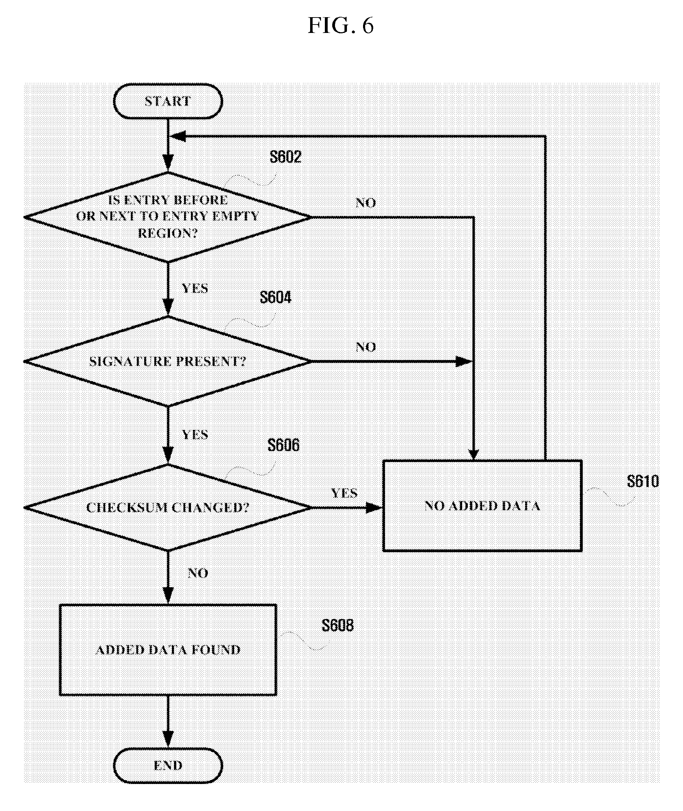

Figure 5 is a flow chart illustrating a method of storing and managing the additional data in a file system according to an exemplary embodiment of the present invention. The search unit 310 searches for an unused region (S502). The search unit 330 stores a variety of additional data in the unused region (S504). The additional data managing unit 360 manages the additional data using the signature and the checksum of the stored additional data (S506). Management of the added data implies utilizing the stored additional data via various methods, and enhancing the performance of the file system. Several examples will be described with reference to FIGS. 6 to 11.

Figure 6 is a flow chart illustrating a method of accessing the added data according to an exemplary embodiment of the present invention. The additional data managing unit 360 inspects whether a directory entry before or next to a directory entry containing file data is empty, according to control by the control unit 320 (S602). Although additional data is stored in the region, since the first sector of the 32 Bytes of data starts with "0," it is recognized as an empty region according to the FAT specification. Accordingly, if the inspected directory entry is recognized as an empty region, the additional data managing unit 360 first inspects whether a signature (signaling that added data is included) is present in order to determine whether the region has added data (S604). If the signature is present, the additional data managing unit 360 inspects whether the checksum of the data has been changed since the added data is likely to be changed in a different file system (5606). As a result of comparing the checksum of the added data with the newly created checksum, it determines that added data has been found, if there is no change in the checksum (S608). However, if no empty region is present in S602, no signature is present in S604, or no checksum change is present in S606, the additional data managing unit 360 determines that there is no added data.

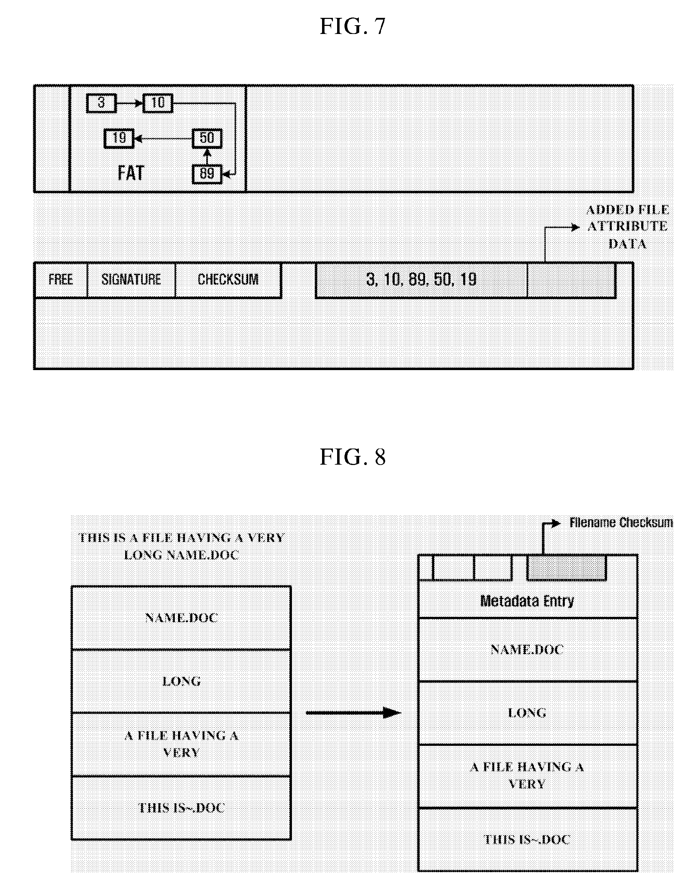

Figure 7 illustrates a method of moving read and write positions within a file according to another exemplary embodiment of the present invention. When position data within a file is added according to direction by the control unit 320, the file data search unit 350 moves read and write positions within the file according to the added position data. Specifically, the upper figure in Figure 7 depicts a method of storing position data within the file in the conventional FAT file system. The conventional FAT file system stores file position data in several regions in a distributed manner. As a result, the region numbers may be sequenced as: 3 → 10 → 89 → 50 → 19, as in the upper figure. The next data position is recorded in each region of the FAT, and thus, the region #10 should be read in order to read region #89. However, it is not known at the beginning whether region #10 exists, and thus, region #10 can be searched for sequentially from region #3, which is the start position of the file. The region indicated by the FAT uses several sectors, and accordingly, the quantity of data to be read by the storage unit 330 considerably increases. When a user is reading the file in order from the beginning, the regions can be sequentially searched and read from the start position. If, however, the user wants to return to region #89 while the user is reading region #50, a search in the sequence 3 → 10 → 89 should be conducted. Accordingly, in case of a large file, the number of searches would considerably increase, thereby causing degradation in the speed. At this time, if position data of the file is recorded in the region to store additional data, as depicted in the lower region of Figure 7, movement to read and write positions will be prompt and efficient. In addition, all the added data is collected in one region, and the quantity of data to be read decreases.

When attribute data of a file is added, the additional data managing unit 360 analyzes several attributes of the file according to the attribute data. Currently, digital media is recorded in various file formats. There are over 10 moving image or music file formats, and the file content must be read in order to analyze each file. However, if attribute data of the file is stored, an improvement in the speed in analyzing the file can be expected. The attributes that can be stored in the conventional FAT file system are limited to: "hidden," "read only," "system," "volume," "directory," "archive," and "long name." Referring to the lower region of Figure 7, additional attributes can be stored in the position labeled "added file attribute data," and several attributes of the file can be simultaneously stored. The attribute data that can be added includes, e.g., attribute data for a compressed file or a shortcut attribute data of a file. By storing additional attributes, information on the file can be easily obtained without reading the head portion in full.

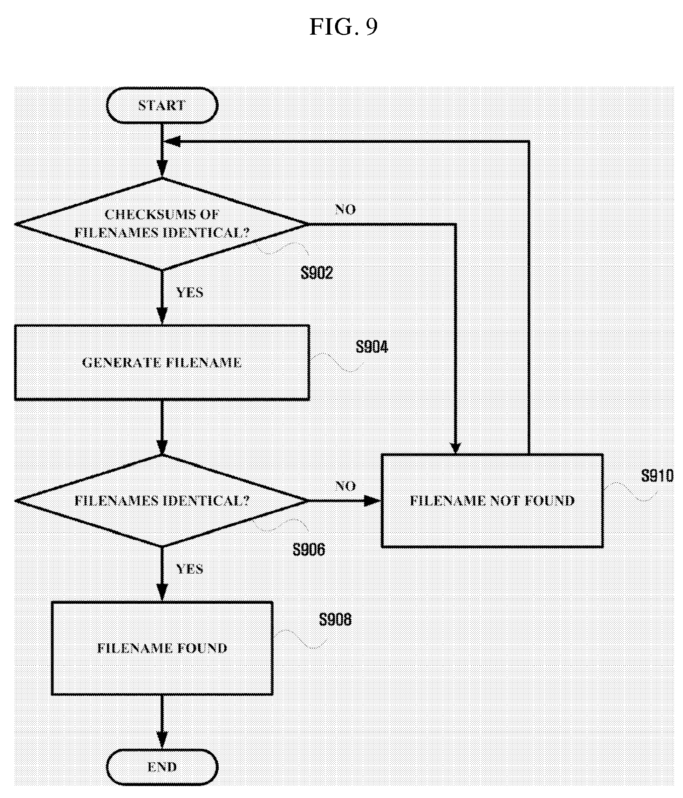

A method of quickly searching for a file using the additional data will be described with reference to Figures 8 and 9 which illustrate a concept of quickly searching for a file or directory according to another exemplary embodiment of the present invention. Figure 8 shows the storage of a long filename in a directory entry. When a filename is long, the name is separated and distributed in several directory entries. In the conventional FAT file system, the distributed filenames are combined in a single long filename and compared with the name of a target file when searching for the target file. In this case, many operations are required to produce the long filename and the quantity of data to be compared increases. However, when the checksum, as illustrated in Figure 8, is stored in the additional data region and data for the filename is added, the file/directory search unit 340 compares the checksum of the filename with the checksum of the target filename according to direction by the control unit 320 (S902). As a result, if the checksums are identical, the file/directory search unit 340 generates the filename (S904) and compares the generated filename with the target file name (S906). When the filenames are identical, the file searched for is located (S908). If, however, it is determined that the checksums are different in step S902, or the generated filename is different from the target file name in step S906, the file is not located (S910), and thus, the process returns to step S902 in order to compare the checksums.

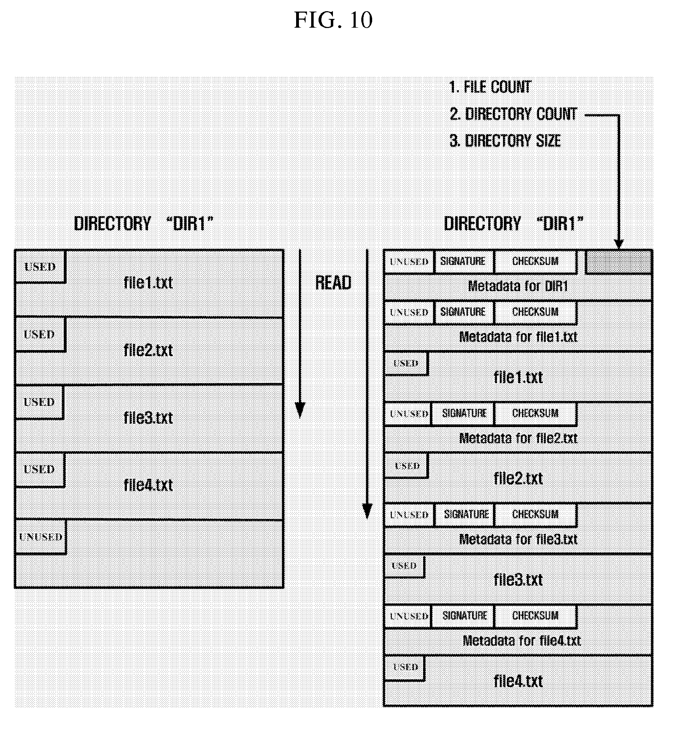

Figure 10 illustrates a concept of additionally storing information on a directory according to another exemplary embodiment of the present invention. The left side of Figure 10 shows the storing of files in a directory of the conventional FAT file system. To obtain the number of files in a directory or the number of directories, the files and directories have to be read by moving from the first region to the last region of the directory. In this case, several regions in a directory need to be read and operations to discriminate a file from a directory are needed. To obtain the size of a directory, an operation to sum the sizes of the respective files is also needed, thereby producing inefficiency. As shown in the right side of Figure 10, if data for directories are added, the additional data managing unit 360 can read all the data through a single read operation when needed, including data for the directories, i.e., the numbers and sizes of files within a directory/directories, in a region before the position of the first file within the directory. The right side of Figure 10 storing of metadata of each file in an unused region of the directory entry, the unused region being positioned before the location of each file.

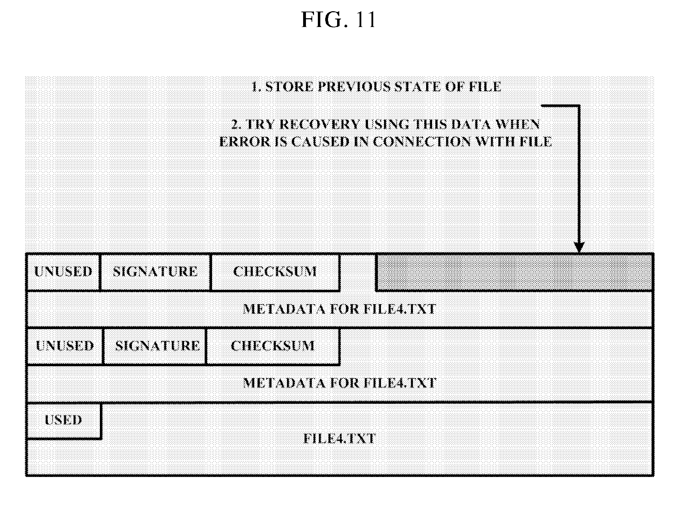

Figure 11 illustrates a concept of additionally storing data for recovery of a file according to another exemplary embodiment of the present invention. This embodiment is applied when recovery data for a file is additionally stored. The conventional FAT file system has no space for storing information for recovery of a file or directory, and thus, this file system is occasionally damaged when power is abruptly interrupted. However, the recovery data is recorded in the additional data region according to the present embodiment, and the secure recovery can be conducted using this data despite a power interruption. The recovery method will not be described in detail but a region to store data available for recovery is provided in the present embodiment.

As another example, mapping data of clusters storing data of a file may be additionally stored in an empty region of a directory entry. Data relating to security of a file may also be additionally stored.

The present invention is applied to the FAT file system but is not limited thereto since additional data can be recorded and utilized in other file systems.

According to the exemplary embodiments of the present invention, additional data can be stored, used and managed utilizing unused regions of a directory entry without degrading the compatibility of the file system, and enhancing the performance of the FAT file system.

Quick access to the additional stored data is possible, and searching performance is enhanced since the entire filename is not compared when searching for a file. In addition, read and write positions within a file is not searched for in sequence, but are searched for using position data added to the file, and thus, read and right positions can be easily moved within the file.

The attributes of a file can be analyzed, a file with the long name can be easily located, the number and size of directories can be easily obtained, and log data of the file can be additionally recorded, thereby easily recovering the file.

Since additional data can be recorded even in file systems other than the FAT file system if they have the same recording method as the present invention, the performance thereof is enhanced.

The effects of the present invention will not be limited to the effects described above. Any other effects not described above that can be appreciated by those skilled in the art from the following claims are within the scope of the invention.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for storing and managing additional data in a file system, the apparatus comprising:
a search unit (310) which searches for an unused region in a directory entry;
a storage unit (330) which stores additional data in the unused region; and
an additional data managing unit (360) which locates a position of the additional data using a signature and a checksum of the additional data.

2. The apparatus of claim 1, wherein data stored in the unused region comprises at least one of a signature implying presence of the additional data, the additional data and the checksum of the additional data.

3. The apparatus of claim 1 or 2, wherein, if no empty region to store additional data for a file or directory is found, the additional data managing unit (360) moves data for a predetermined file or directory stored in a region to another region to make the region empty so that the additional data for the file or directory can be stored in the region.

4. The apparatus of claim 1, 2 or 3, wherein the additional data managing unit (360):
checks whether a directory entry, positioned previous or next to another directory entry which stores data for a file, is an empty region;
checks whether the signature of the additional data is present in the empty region if the directory entry is an empty region;
checks for a change in the checksum of the additional data if the signature is present; and
determines that the additional data is present if no change in the checksum has occurred.

5. The apparatus of any preceding claim, further comprising a file data search unit (350) which moves read and write positions within a file according to position data, wherein the additional data comprises the position data.

6. The apparatus of any preceding claim, wherein the additional data managing unit (360) analyzes attributes of a file according to attribute data of the file, wherein the additional data comprises the attribute data.

7. The apparatus of any preceding claim, further comprising a file/directory search unit (340) which searches for a file using the checksum of the additional data, wherein the additional data comprises a filename of the file.

8. The apparatus of claim 7, wherein the file/directory search unit:
searches for a target file by comparing the checksum of the filename of the file with a checksum of a filename of the target file;
generates the filename of the file if the two checksums are identical;
compares the generated filename with the filename of the target file; and
locates the target file if the generated file name is identical with the filename of the target file.

9. The apparatus of any preceding claim, wherein the additional data managing unit (360) stores data for a directory in a region before a position of a first file within the directory, wherein the additional data comprises data for the directory.

10. The apparatus of claim 9, wherein the data for the directory comprises at least one of the number of files in the directory, the number of subdirectories in the directory, a size of the directory and a size of each subdirectory.

11. The apparatus of any preceding claim, wherein the additional data comprises data for restoring a file to a previous state.

12. The apparatus of any preceding claim, wherein the additional data comprises cluster mapping data for storing data of a file.

13. The apparatus of any preceding claim, wherein the additional data comprises data for security of a file.

14. A method of storing additional data in a file system, the method comprising:
(a) searching for an unused region in a directory entry; and
(b) storing additional data in the unused region.

15. The method of claim 14, further comprising, if no empty region to store additional data for a file or directory is found, moving data for a predetermined file or directory stored in a region to another region to make the region empty so that the additional data for the file or directory can be stored in the region.

16. The method of claim 14 or 15, wherein (b) comprises storing data for a directory in a region before a position of a first file within the directory, wherein the additional data comprises data for the directory.

17. The method of claim 16, wherein the data for the directory comprises at least one of the number of files in the directory, the number of subdirectories in the directory, a size of the directory and a size of each subdirectory.

18. The method of any of claims 14 to 17, wherein the additional data comprises data for restoring a file to a previous state.

19. The method of any of claims 14 to 18, wherein the additional data comprises cluster mapping data for storing data of a file.

20. The method of any of claims 14 to 19, wherein the additional data comprises data for security of a file.

21. A method of managing additional data stored in a file system, comprising locating position of the additional data using a signature and a checksum of the additional data.

22. The method of claim 21, further comprising:
(i) checking whether a directory entry, positioned previous or next to another directory entry which stores data, is an empty region;
(ii) checking whether the signature of the additional data is present in the empty region if the directory entry is an empty region;
(iii) checking for a change in the checksum of the additional data if the signature is present; and
(iv) determining that the additional data exists if no change in the checksum has occurred.

23. The method of claim 21 or 22, further comprising moving read and write positions within a file according to position data of the file, when the additional data refers to the position data of the file.

24. The method of claim 21, 22 or 23, further comprising analyzing attributes of a file according to attribute data of the file, when the additional data refers to the attribute data of the file.

25. The method of any of claims 21 to 24, further comprising searching for a file using the checksum of the additional data, when the additional data refers to a filename of the file.

26. The method of claim 25, further comprising:
searching for a target file by comparing the checksum of the filename of the file with a checksum of a filename of the target file;
generating the filename of the file if the two checksums are identical;
comparing the generated filename with the filename of the target file; and
locating the target file if the generated file name is identical with the filename of the target file.
